Europäisches Patentamt

European Patent Office

Office européen des brevets

(19)

(11) Publication number: **0 438 279 A1**

(12) # EUROPEAN PATENT APPLICATION

(21) Application number: **91300302.6**

(22) Date of filing: **16.01.91**

(51) Int. Cl.⁵: **B29C 45/17**

(30) Priority: **17.01.90 IL 93082**

(43) Date of publication of application:
**24.07.91 Bulletin 91/30**

(84) Designated Contracting States:
**AT BE CH DE DK ES FR GB GR IT LI LU NL SE**

(71) Applicant: **KETER PLASTIC LTD.**
**27, Beit Eshel Street**
**Jaffa 68025 (IL)**

(72) Inventor: **Ramach, Rami**
**1 Old Park Road, Palmers Green**
**London, N13 4RG (GB)**

(74) Representative: **Miller, Joseph et al**
**J. MILLER & CO. Lincoln House 296-302 High Holborn**
**London WC1V 7JH (GB)**

(54) **A method and system for gas injection moulding a hollow object.**

(57) A method and system are disclosed for injection moulding a hollow object. The method comprises the steps of completely filling with molten plastics material a mould cavity having a sprue for receiving the plastics material and an outlet sealed by a shutter means for preventing the plastics material from escaping therethrough. An outer portion of the plastics material is then allowed to set at least partially within the mould cavity whereupon the shutter means is removed and a quantity of the plastics material is displaced from inside the mould cavity through the outlet so as to form a hollow object in the mould cavity which is then allowed to set completely within the mould cavity. The method is particularly adapted for use with a gas injection moulding technique and also allows for the displaced plastics material to be consolidated to an outer wall of the moulded object.

EP 0 438 279 A1

Fig.1

# A METHOD AND SYSTEM FOR GAS INJECTION MOULDING A HOLLOW OBJECT

## FIELD OF THE INVENTION

This invention relates to a method and system for gas injection moulding a hollow object.

## BACKGROUND OF THE INVENTION

It is known that gas injection moulding techniques are particularly suited for the moulding of hollow objects with the consequent savings in material costs over casting similar objects solid. When casting hollow objects in this manner, the total volume of the moulded object is occupied by a peripheral volume of plastics material surrounding a central volume of gas. Thus, since the volume of plastics material required is somewhat less than the total volume of the mould cavity, it is known to inject into the mould cavity only the total required volume of plastics material. It has been proposed either to inject the plastics material together with the gas simultaneously or, alternatively, to inject some plastics material before injecting the gas.

It is known that the pressure to which the injected plastics material is subjected within the mould cavity influences the surface quality of the moulded object. In injection moulding apparatus wherein gas injection moulding is not employed, sufficient plastics material is injected into the mould at very high pressure in order completely to fill the cavity and thereby achieve a high surface quality.

However, when moulding hollow objects, it is usual not to fill the mould completely but, rather, to inject a volume of plastics material which is somewhat less than that of the mould itself. As the mould is cooled, material near the inside surface of the mould starts to solidify immediately whilst the material towards the centre of the mould takes longer to solidify and therefore remains molten for a short period of time. Whilst this situation obtains, gas may be injected into the mould so as to displace the material which remains molten from the mould, thereby producing a hollow object therein.

U.S. Patent No. 4,923,667 (Sayer) discloses such a method for gas injection moulding a hollow object. A quantity of molten plastic material is introduced into a mould cavity and pressurized gas is then injected into an interior of the molten plastic material so as to form a gas containing cavity therein. The plastic material is then allowed to cool sufficiently so that the moulded article can itself sustain the form dictated by the mould surface, whereupon the cavity is vented to reduce the pressure within the cavity to ambient pressure prior to opening the mould.

The method disclosed by Sayer thus employs a reduced quantity of plastics material and the resulting moulded article is less expensive than would be an equivalent solid object. However, since the mould is not completely filled with plastics material, the pressure acting upon the surface of the moulded object is reduced and the surface quality thereof is reduced accordingly.

In contrast to what has been stated above regarding the injection moulding of hollow objects, it is known during the manufacture of substantially solid objects to inject gas into a mould filled with plastics material in order to expand the plastics material within the mould and thereby compensate for the natural shrinkage of the plastics material.

Thus, for example, U.S. Patent No. 4,923,666 (Yamazaki et al.) discloses a resin moulding produced by introducing a molten plastics resin into a mould cavity so as completely to fill the mould cavity. Subsequently, during the cooling of the resin, pressurized gas is injected into the resin within the mould cavity. The resin moulding cools and hardens in the mould cavity while the gas is maintained under pressure, thereby taking up the shrinkage in the resin. Such a process results in the formation of a substantially solid object and is not suitable for producing hollow objects having a superior surface finish.

## SUMMARY OF THE INVENTION

It is an object of the invention to provide a method and system for injection moulding hollow objects, in which the drawbacks associated with hitherto proposed methods and systems are substantially reduced or eliminated.

According to a first aspect of the invention, there is provided a method for injection moulding a hollow object, characterised in that it comprises the steps of:

completely filling with molten plastics material a mould cavity having a sprue for receiving the plastics material and an outlet sealed by a shutter means for preventing the plastics material from escaping therethrough,

allowing an outer portion of the plastics material to set at least partially within the mould cavity,

removing the shutter means,

displacing a quantity of the plastics material from inside the mould cavity through the outlet so as to form said hollow object in the mould cavity, and

allowing the hollow object to set completely within the mould cavity.

According to a second aspect of the invention, there is provided a system for injection moulding a hollow object, characterised in that the system comprises :

a mould casing having an internal wall defining a main cavity adjoining a subsidiary cavity along a common boundary,

shutter means displaceable from a first position in which the main cavity is closed around the common boundary to a second position in which the main cavity and the subsidiary cavity are interconnected,

biasing means coupled to the shutter means for biasing the shutter means into the first position,

conveying means for conveying plastics material into the main cavity in sufficient quantity completely to fill the main cavity,

first displacing means coupled to the shutter means for displacing the shutter means into the second position, and

second displacing means coupled to the main cavity and operative when the biasing means is disabled for displacing a quantity of the plastics material from inside the main cavity to the subsidiary cavity so as to produce said hollow object in the main cavity.

Thus, according to the invention there is provided a method and system for injection moulding a hollow object wherein the object is first moulded by completely filling the mould cavity with plastics material so that the pressure exerted by the walls of the mould cavity on the moulded object is comparable to that in conventional injection moulding techniques for producing solid objects. By this means, the surface quality of the moulded object is enhanced such that when material is displaced from inside the moulded object so as to form a hollow object within the mould, the surface quality of the moulded object remains unimpaired.

## BRIEF DESCRIPTION OF THE DRAWINGS

The invention will now be described, by way of non-limiting example only, with regard to a method and system for gas injection moulding a hollow tubular framework with reference to the accompanying drawings, in which :

Fig. 1 is a pictorial representation showing a system according to a first embodiment of the invention during a first stage of operation ;

Fig. 2 is a pictorial representation of the system shown in Fig. 1, during a second stage of operation ;

Figs. 3 and 4 are partial sectional views of a second embodiment showing pictorially a system according to the invention for reconsolidating the displaced plastics material to the moulded object; and

Fig. 5 is a partial perspective view of a hollow object moulded with the system shown in Figs. 3 and 4.

## DETAILED DESCRIPTION OF A PREFERRED EMBODIMENT

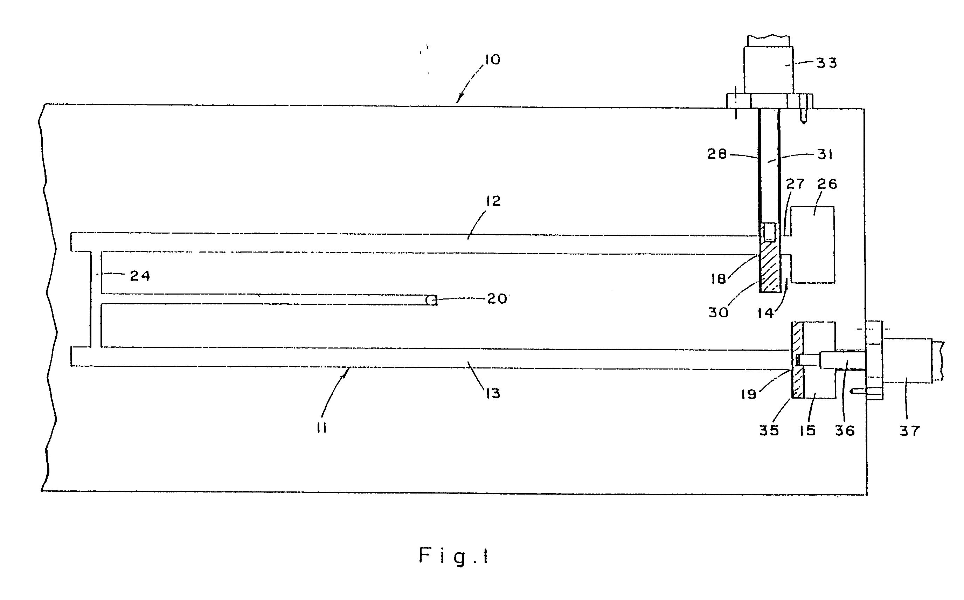

Referring to Fig. 1, there is shown a mould designated generally as 10, having an internal wall 11 which defines a pair of main cavities 12 and 13 adjoining respective subsidiary cavities 14 and 15 along corresponding common boundaries 18 and 19.

A sprue 20 (constituting a conveying means) is provided for conveying plastics material into each of the main cavities 12 and 13 by means of a couple of branches 24 and 25.

The first and second main cavities 12 and 13, as well as the second subsidiary cavity 15, are circular in cross-section, whilst the first subsidiary cavity 14 comprises a substantially square cross-section cavity 26 having a substantially circular inlet cavity 27 whose diameter is equal to that of the first main cavity 12. Connected to the inlet cavity 27 and perpendicular thereto, is a right circular cylindrical branch pipe 28 which abuts the first main cavity 12 around the common boundary 18. Thus, the combination of the cavity 26, the inlet cavity 27 and the branch pipe 28 constitutes the first subsidiary cavity 14.

Provided in the branch pipe 28 is a first piston head 30 (constituting a shutter means) connected at an end thereof to a hydraulically operated plunger 31. A first hydraulic mechanism 33 (shown only partially) applies an axial force to the first plunger 31 by means of which a circular face of the first piston 30 is adapted to move down or up within the branch 28, thereby closing or opening, respectively, the first main cavity 12 at the boundary 18.

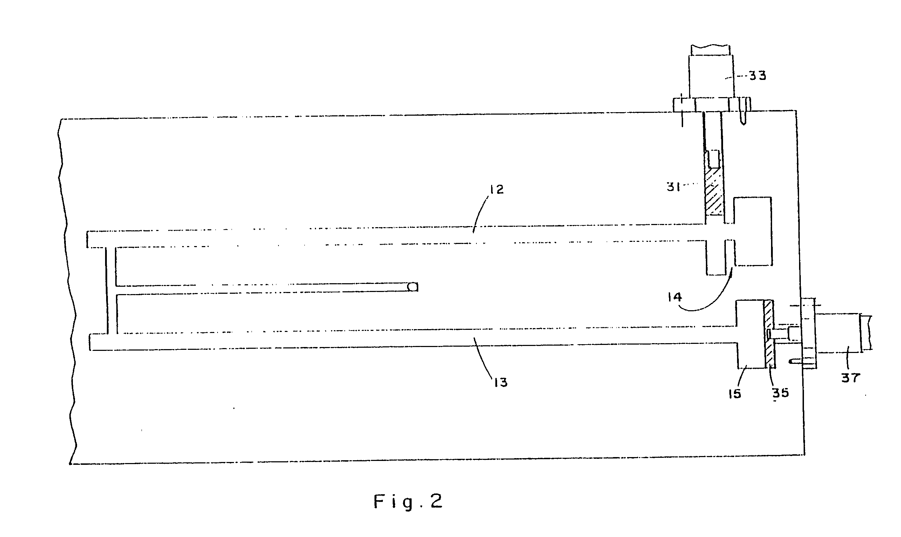

Similarly, there is provided within the second subsidiary cavity 15 a second piston head 35 coupled to a second plunger 36 operated by a hydraulic mechanism 37 (also shown only in partial detail). On operating the hydraulic mechanism 37, an axial force is applied to the second plunger 36 which is adapted to move the second piston head 35 within the second subsidiary cavity 15. The second piston head 35 also constitutes a shutter means which, in a first position, seals the first main cavity 13 around the common boundary 19 (as shown in Fig. 1) and in a second position (shown in Fig. 2) opens the first main cavity 13 such that it adjoins the second subsidiary cavity 15 around the common boundary 19.

Referring now to Fig. 2 of the drawings, there is shown the identical system shown in Fig. 1 during a second stage of operation, wherein the first and second piston heads 30 and 35, respectively, are retracted by their respective hydraulic mechanisms 33 and 37 so that the first and second main cavities 12 and 13 are interconnected to their respective subsidiary cavities 14 and 15.

A method for using the injection moulding system described above with reference to Figs. 1 and 2 of the drawings will now be described. During a first stage of operation, as shown in Fig. 1, the first and second main cavities 12 and 13 are closed off from their respective subsidiary cavities 14 and 15 by means of the respective piston heads 30 and 35. The first and second main cavities 12 and 13 are then completely filled with molten plastics material which is injected through the sprue 20 at high pressure. The plastics material (not shown) is distributed into the first and second main cavities 12 and 13 via the branches 24 and 25.

The volume of plastics material required to fill completely the first main cavities 12 and 13 is a function of the geometry of the mould and is therefore known. When sufficient plastics material has been injected so as completely to fill the first and second main cavities 12 and 13, and after an outer portion of the plastics material has at least begun to set within the mould, the first and second piston heads 30 and 35 are retracted by their respective hydraulic mechanism 33 and 37 into the position shown in Fig. 2 of the drawings, wherein the respective main and subsidiary cavities are interconnected along their common boundaries.

Gas is now injected through the sprue 20 so as to force a quantity of the plastics material from the still molten inner portions of the plastics material within the first and second main cavities 12 and 13 into their respective subsidiary cavities 14 and 15. In this manner hollow tubes are formed in the main cavities 12 and 13, the surplus core material being displaced into the subsidiary cavities 14 and 15.

This having been done, the mould 10 is water-cooled in known manner in order to set the plastics material completely within the main and subsidiary cavities. The mould 10 is then split open, the plastics moulding removed, and the surplus material formed within the subsidiary cavities 14 and 15 may then be detached from the main moulding formed within the main cavities 12 and 13.

The subsidiary cavities 14 and 15 are both substantially greater in cross-section than the respective main cavities 12 and 13 but are substantially shorter in length than the main cavities. By this means the subsidiary cavities 14 and 15 have sufficient volume to accommodate the surplus material without adding significantly to the overall length of the mould 10.

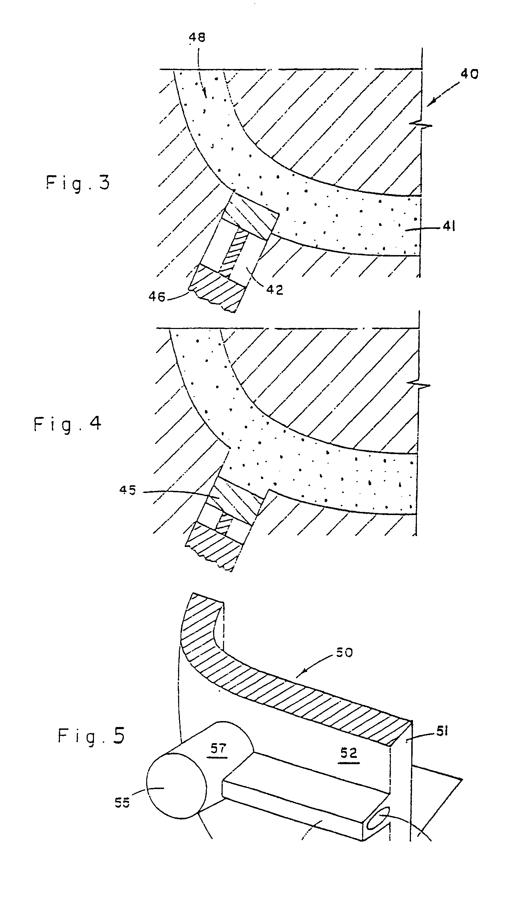

Referring now to Figs. 3 and 4 of the drawings, there is shown in partial sectional elevation a mould designated generally as 40, having a main cavity 41 and a subsidiary cavity 42. A piston head 45 is provided within the subsidiary cavity 42 and is adapted to be retracted by means of a hydraulic mechanism 46 (shown only in partial detail).

As shown in Fig. 3, plastics material 48 is introduced into the main cavity 41 with the piston head 45 sealing the main cavity 41 and the subsidiary cavity 42 along their common boundaries. In Fig. 4, the piston head 45 is retracted and gas is injected at high pressure into the main cavity 41 so as to force a quantity of the plastics material 48 from the main cavity 41 into the subsidiary cavity 42, thereby producing a hollow core in the object formed in the main cavity 41.

Fig. 5 shows a partial perspective view of an object 50 extracted from the mould shown in Fig. 4 of the drawings. It will be seen that the object 50 has a sidewall portion 51 having a face 52 projecting from which is a flange 53 having a hollow axial core 54. Also projecting from the face 52 of the sidewall portion 51 is a cylindrical boss 55 whose shape corresponds to the internal shape of the subsidiary cavity 42 shown in Figs. 3 and 4 of the drawings. A sidewall surface 57 of the boss 55 abuts an end of the flange 53 along a surface corresponding, in part, to the common boundary between the main cavity 41 and the subsidiary cavity 42 shown in Figs. 3 and 4 of the drawings.

Thus, the mould described with reference to Figs. 3 and 4 of the drawings permits the surplus material formed within the subsidiary cavity 42 to be reconsolidated to a peripheral surface of the hollow object formed in the main cavity 41.

It will be apparent that many variations may be effected to the arrangements described above, without departing from the spirit of the invention. For example, the above method for forming a hollow object using gas-injection moulding is equally applicable to the manufacture of single objects or to the mass-manufacture of multiple objects using a mould with a plurality of interconnected cavities and corresponding, adjoining subsidiary cavities. In the first embodiment described above, the first and second subsidiary cavities 14 and 15 are shown to have different cross-sections and the directions of travel of the respective plungers 31 and 36 are likewise shown to be different in order to demonstrate that the invention may be put to practice in a variety of ways.

Similarly, whilst in the first embodiment the second piston head 35 is hydraulically retracted into the open position (shown in Fig. 2), it will be understood that the hydraulic force which urges the second piston head 35 into the closed position (shown in Fig. 1) need, in fact, only be released. Under these circumstances, the act of displacing plastics material from within the second cavity 13 itself forces the second piston head 35 into the open position (shown in Fig. 2), whereby the surplus plastics material may flow into the second subsidiary cavity 15. In this respect, the hydraulic force constitutes a biasing means for biasing the second piston head 35 into the closed position (shown in Fig. 1).

It will also be understood that whilst in the first embodiment, the planes through the respective common boundaries 18 and 19 are normal to the longitudinal axes of the main cavities 12 and 13, the angle between respective main and subsidiary cavities may be varied as required, as shown with regard to the second embodiment.

Finally, whilst the invention has been described with particular reference to gas injection moulding, it will be understood that the method itself is equally applicable to the production of hollow objects wherein a core is removed from a solid object formed within the main cavity by means of a mechanical plunger, or the like, such that the surplus material is forced into the adjoining subsidiary cavity.

## Claims

1. A method for injection moulding a hollow object, characterised in that it comprises the steps of :

completely filling with molten plastics material a mould cavity (12, 13, 41) having a sprue (20) for receiving the plastics material and an outlet (27) sealed by a shutter means (30, 35, 45) preventing the plastics material from escaping therethrough,

allowing an outer portion of the plastics material to set at least partially within the mould cavity (12, 13, 41),

removing the shutter means (30, 35, 45),

displacing a quantity of the plastics material from inside the mould cavity (12, 13, 41) through the outlet so as to form said hollow object (50) in the mould cavity (12, 13, 41), and

allowing the hollow object (50) to set completely within the mould cavity (12, 13, 41).

2. The method according to Claim 1 for injection moulding at least two hollow objects at the same time, comprising the steps of :

completely filling with molten plastics material at least two mould cavities (12, 13) having a common sprue (20) for receiving the plastics material and respective outlets sealed by respective shutter means (30, 35) for preventing the plastics material from escaping therethrough,

allowing an outer portion of the plastics material to set at least partially within each mould cavity (12, 13),

removing each of the shutter means (30, 35),

displacing a quantity of the plastics material from inside each mould cavity (12, 13) through its respective outlet so as to form said hollow objects in the respective mould cavities (12, 13), and

allowing the hollow objects to set completely within the respective mould cavities (12, 13).

3. The method according to Claim 1 or 2, wherein the plastics material (48) displaced from inside the or each mould cavity (41) remains consolidated to a surface (52) of the or each hollow object (50).

4. The method according to Claim 1 or 2, wherein the plastics material displaced from inside the or each mould cavity (12, 13) is removed from the or each hollow object.

5. A system for injection moulding a hollow object, characterised in that the system comprises :

a mould casing having an internal wall defining a main cavity (12, 13, 41) adjoining a subsidiary cavity (14, 15, 42) along a common boundary (18, 19),

shutter means (30, 35, 45) displaceable from a first position in which the main cavity (12, 13, 41) is closed around the common boundary (18, 19) to a second position in which the main cavity (12, 13, 41) and the subsidiary cavity (14, 15, 42) are interconnected,

biasing means (33, 37, 46) coupled to the shutter means (30, 35, 45) for biasing the shutter means (30, 35, 45) into the first position,

conveying means (20) for conveying plastics material into the main cavity (12, 13, 41) in sufficient quantity completely to fill the main cavity (12, 13, 41),

first displacing means (33, 37, 46) coupled to the shutter means (12, 13, 41) for displacing the shutter means (12, 13, 41) into the second position, and

second displacing means coupled to the main cavity (12, 13, 41) and operative when the biasing means (33, 37, 46) is disabled for displacing a quantity of the plastics material (48) from inside the main cavity (12, 13, 41) to the subsidiary cavity (14, 15, 42) so as to produce said hollow object in the main cavity (12, 13, 41).

6. The system according to Claim 5, wherein :

the subsidiary cavity (14, 15) has a length along an axis normal to a plane through said common boundary (18, 19) substantially less than that of the main cavity (12, 13) and has a substantially greater cross-sectional area normal to said axis than that of the main cavity (12, 13) ;

whereby the mould (10) has a length which is not substantially greater than a length of the main cavity (12, 13).

7. The system according to Claim 6, wherein :

the shutter means (30, 35, 45) includes a piston head (30, 35, 45) displaceable within the subsidiary cavity (14, 15, 42) such that in said first position a surface thereof bears against the common boundary.

8. The system according to Claim 7, wherein the biasing means (33, 37, 46) is hydraulic and the second displacing means is adapted to displace the piston head (30, 35, 45) into the second position when the biasing means (33, 37, 46) is disabled.

9. The system according to Claim 7, wherein both the biasing means (33, 37, 46) and the first displacing means (33, 37, 46) are hydraulic.

10. The system according to any one of Claims 6 to 9, wherein the first displacing means (33, 37, 46) is operable in a direction parallel to said axis.

11. The system according to any one of Claims 6 to 9, wherein the first displacing means (33, 37, 46) is operable in a direction normal to said axis.

12. The system according to any one of Claims 5 to 11, wherein the second displacing means is a gas.

13. A system for injection moulding at least two hollow objects at the same time, characterised in that it the system comprises :

a mould casing having internal walls which define at least two main cavities (12, 13) adjoining respective subsidiary cavities (14, 15) along corresponding common boundaries (18, 19),

respective shutter means (30, 35) each displaceable from a first position in which the main cavity (12, 13) is closed around the corresponding common boundary (18, 19) to a second position in which the main cavity (12, 13) and the corresponding subsidiary cavity (14, 15) are interconnected,

biasing means (33, 37) coupled to each of the shutter means (30, 35) for biasing each of the shutter means (30, 35) into the first position,

conveying means (20) for conveying plastics material into each of the main cavities (12, 13) in sufficient quantity completely to fill the main cavities (12, 13,

first displacing means (33, 37) coupled to each of the shutter means (30, 35) for displacing the shutter means (30, 35) into the second position, and

second displacing means coupled to each of the main cavities (12, 13) and operative when the biasing means (33, 37) is disabled for displacing a quantity of the plastics material from inside each of the main cavities (12, 13) to the respective subsidiary cavities (14, 15) so as to produce a hollow object in each of the main cavities (12, 13).

Fig. 1

Fig.2

Fig.3

Fig.4

Fig.5

EP 0 438 279 A1

European Patent Office

**EUROPEAN SEARCH REPORT**

Application Number

| DOCUMENTS CONSIDERED TO BE RELEVANT | | | EP 91300302.6 |
|---|---|---|---|

| Category | Citation of document with indication, where appropriate, of relevant passages | Relevant to claim | CLASSIFICATION OF THE APPLICATION (Int. Cl.5) |
|---|---|---|---|
| Y | EP - A2 - 0 289 230 (CINPRES) <br> * Abstract; fig. 3 * <br> -- | 1,5 | B 29 C 45/17 |
| Y | US - A - 4 104 353 (MONNET) <br> * Claims; fig. 3a-3d * <br> -- | 1,5 | |
| A | EP - A2 - 0 321 117 (LADNEY) <br> * Totality * <br> ---- | | |
| | | | **TECHNICAL FIELDS SEARCHED (Int. Cl.5)** |
| | | | B 29 C |

The present search report has been drawn up for all claims

| Place of search | Date of completion of the search | Examiner |
|---|---|---|
| VIENNA | 09-04-1991 | MAYER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

11